# EUROPÄISCHE PATENTSCHRIFT

(11) **EP 4 298 013 B1**
(45) Veröffentlichungstag und Bekanntmachung des Hinweises auf die Patenterteilung: **01.04.2026**
(21) Anmeldenummer: 22707125.5
(22) Anmeldetag: 22.02.2022
(51) Int. Cl.: B63H 5/08, B63H 5/16, B63H 1/28

(54) **ENERGIESPARANORDNUNG FÜR DOPPELSCHRAUBENSCHIFFE**
ENERGY-SAVING ARRANGEMENT FOR TWIN-SCREW SHIPS
DISPOSITIF D'ÉCONOMIE D'ÉNERGIE POUR NAVIRES À DOUBLE HÉLICE

(30) Priorität: 24.02.2021 DE 202021100922 U
(43) Veröffentlichungstag der Anmeldung: 03.01.2024
(73) Patentinhaber: Becker Marine Systems GmbH, 21079 Hamburg (DE)
(72) Erfinder: KUHLMANN, Henning, 21079 Hamburg (DE)
(74) Vertreter: RGTH
(86) Internationale Anmeldenummer: PCT/EP2022/054337
(87) Internationale Veröffentlichungsnummer: WO 2022/180008

(56) Entgegenhaltungen:
- JP-A- 2015 116 850
- JP-U- S60 169 094
- US-B2- 8 403 716
- US-B2- 9 789 943

## Beschreibung

Die Erfindung betrifft eine Anordnung zur Verringerung des Antriebsleistungsbedarfs eines Doppelschraubenschiffs, aufweisend einen ersten Propeller und einen zweiten Propeller und aufweisend eine erste Leitvorrichtung und eine zweite Leitvorrichtung, wobei in Vorwärtsfahrtrichtung des Wasserfahrzeugs betrachtet die erste Leitvorrichtung vor dem ersten Propeller und die zweite Leitvorrichtung vor dem zweiten Propeller angeordnet sind. Des Weiteren betrifft die Erfindung ein Wasserfahrzeug, insbesondere ein Doppelschraubenschiff, mit einer derartigen Anordnung.

Es sind bereits unterschiedliche Vorrichtungen zur Verringerung des Antriebsleistungsbedarfs eines Wasserfahrzeuges bekannt. Beispielsweise kann eine in Fahrtrichtung des Wasserfahrzeugs vor dem Propeller vorgeschaltete Ringdüse eine Anströmung des Propellers optimieren und sich somit positiv auf einen Energieverbrauch des Wasserfahrzeugs auswirken. Dokument JP 2015 116850 A offenbart auch eine Vorrichtung zur Verringerung des Antriebsleistungsbedarfs eines Wasserfahrzeugs.

Des Weiteren sind aktive Vorrichtungen bekannt, welche die Reibungsverluste oder Drallverluste zwischen dem Wasser und dem Rumpf verringern. Derartige Vorrichtungen können durch Düsen Luftblasen erzeugen, welche sich entlang des Rumpfs verteilen und die Reibung des Rumpfs verringern, wodurch eine zusätzliche Energieeinsparung ermöglicht wird.

Bei Schiffen mit asymmetrischen Skegs bzw. Hinterschiffen, wie beispielsweise Doppelschraubenschiffen, wird bereits durch die Asymmetrie des Skegs bereichsweise ein Vordrall einer Anströmung der Propeller erzeugt. Der Vordrall ist jedoch nicht gleichmäßig vor dem Propeller ausgebildet, welcher in Strömungsrichtung hinter dem Skeg angeordnet ist, wodurch eine für den Propeller nicht optimale Anströmung erfolgen kann. Die bereits bekannten Lösungen zur Verringerung des Antriebsleistungsbedarfs können jedoch nicht zu einer gezielten Optimierung des Vordralls eingesetzt werden.

Der Erfindung liegt die Aufgabe zugrunde eine verbesserte Anordnung zum Verringern des Antriebsleistungsbedarfs bzw. zum Verringern eines Verbrauchs von Doppelschraubenschiffen zu schaffen.

Diese Aufgabe wird durch die im Anspruch 1 angegebenen Merkmale gelöst. Weitere vorteilhafte Ausgestaltungen der Erfindung sind in den Unteransprüchen beschrieben.

Gemäß einem Aspekt der Erfindung wird eine Anordnung zur Verringerung des Antriebsleistungsbedarfs eines Doppelschraubenschiffs bzw. sogenannte Twin Screw Vessel bereitgestellt.

Die Anordnung weist einen ersten Propeller und einen zweiten Propeller auf. Des Weiteren weist die Anordnung eine erste Leitvorrichtung und eine zweite Leitvorrichtung auf, wobei in Vorwärtsfahrtrichtung des Wasserfahrzeugs betrachtet die erste Leitvorrichtung vor dem ersten Propeller und die zweite Leitvorrichtung vor dem zweiten Propeller angeordnet sind.

Der erste Propeller und der zweite Propeller sind an einer ersten Propellerwelle und an einer zweiten Propellerwelle befestigt, wobei die erste Propellerwelle eine erste Propellerachse und die zweite Propellerwelle eine zweite Propellerachse definieren. Erfindungsgemäß weisen die erste Leitvorrichtung und die zweite Leitvorrichtung jeweils mindestens eine Finne auf, welche sich von den Propellerachsen aus erstreckt, wobei die Finne der ersten Leitvorrichtung und der zweiten Leitvorrichtung sich nach außen zu den Wasserfahrzeugseiten erstreckt.

Insbesondere ist die wenigstens eine Finne der ersten Leitvorrichtung und der zweiten Leitvorrichtung in einem Bereich mit verringertem Vordrall angeordnet.

Ferner kann sich die mindestens eine Finne beispielsweise radial oder im Wesentlichen radial von den Propellerachsen aus erstrecken.

Die Finne der ersten Leitvorrichtung erstreckt sich dabei zu einer ersten Wasserfahrzeugseite während die Finne der zweiten Leitvorrichtung sich zu einer zweiten, insbesondere der ersten Wasserfahrzeugseite gegenüberliegende, Wasserfahrzeugseite erstreckt. Insbesondere kann sich die Finne der ersten Leitvorrichtung nach Steuerbord und die Finne der zweiten Leitvorrichtung nach Backbord erstrecken, wobei sich keine Finnen der beiden Leitvorrichtungen nach innen, d.h. in einen Bereich zwischen den Propellern erstrecken. Im inneren Bereich zwischen den Propellern sind daher keine Finnen vorgesehen,

Es ist vorgesehen, die Leitvorrichtungen außen, insbesondere an den seitlichen Skegs, anzuordnen, wenn die Rotationsrichtungen der Propeller nach innen gerichtet sind. Hierdurch sind die Leitvorrichtungen der Anordnung auf den aufschlagenden Seiten der Propeller angeordnet, an welchen ein verringerter bzw. nicht vorhandener Vordrall vorliegt.

In den übrigen Bereichen der Anströmung der Propeller wird durch die Asymmetrie der Skegs um die Propeller herum bereits ein Vordrall erzeugt. Die beiden Leitvorrichtungen können somit nur noch in Bereichen der Anströmung angeordnet werden, in denen kein Vordrall vorliegt. Durch den Einsatz der Leitvorrichtungen kann ein bereichsweiser Vordrall bei der Anströmung der Propeller erzeugt werden. Dieser resultiert in einer Anströmung der Propeller die im Wesentlichen vollständig mit einem Vordrall beaufschlagt ist.

Die gezielte bzw. bereichsweise Erzeugung des Vordralls in Bereichen der zu den Propellern anströmenden Wassermassen verringert Strömungsverluste. Dabei erfolgt eine Wechselwirkung zwischen der Wasserströmung und den Leitvorrichtungen in hierfür vorgesehenen Bereichen, die durch die Form der Skegs vorgegeben werden.

Derartige Bereiche, welche den Einsatz von Leitvorrichtungen erfordern, können mit Hilfe einer Strömungssimulation in Fahrtrichtung des Wasserfahrzeugs vor den Propellern ermittelt werden. Eine solche Strömungssimulation kann insbesondere eine CFD (Computational Fluid Dynamics)-Strömungssimulation sein.

Bevorzugt weisen die erste Leitvorrichtung und die zweite Leitvorrichtung jeweils mindestens zwei Finnen auf.

Bei einer vorteilhaften Ausgestaltung weisen die mindestens zwei Finnen der ersten und der zweiten Leitvorrichtung einen Winkel zueinander auf, wobei die mindestens zwei Finnen der Leitvorrichtungen im Bereich von Wellenlagern, insbesondere an der Außenhaut der Stevenrohre, welche zur Lagerung der ersten und zweiten Propellerwelle des Wasserfahrzeuges ausgebildet sind, oder an einer Wasserfahrzeughülle im Bereich von Hinterstevens befestigt sind. Der Winkel zwischen den zwei Finnen der jeweiligen Leitvorrichtung kann ausgehend von dem Wellenlager als Rotationsachse der Finnen definiert sein.

Der Winkel zwischen zwei Finnen oder mehrere Winkel zwischen mindestens drei Finnen der Leitvorrichtung können derart gewählt werden, dass die Finnen einen Bereich mit reduziertem Vordrall flächig umspannen und somit die entsprechende Wasserströmung optimal mit einem Vordrall beaufschlagen können, bevor diese auf einen Propeller trifft.

Die Winkel zwischen den mindestens drei Finnen können gleich oder unterschiedlich gewählt sein, wodurch eine definierte Vordrall-Verteilung bei der Anströmung der Propeller erzeugbar ist. Die Vordrall-Verteilung kann hierbei einen entlang einer Querschnittsfläche der die Propeller anströmenden Wassermassen variierenden Vordrall erzeugen.

Nach einer weiteren Ausführungsform ist die mindestens eine Finne der Leitvorrichtungen dazu eingerichtet einen Vordrall bei einer Anströmung des ersten und des zweiten Propellers zu erzeugen, wobei der Vordrall durch die jeweilige Leitvorrichtung in einem Anströmungsbereich des Propellers erzeugt wird, welcher keinen oder einen reduzierten durch mindestens einen asymmetrischen Skeg bzw. Hinterschiffs erzeugten Vordrall aufweist. Durch diese Maßnahme entsteht eine gleichmäßige oder gleichmäßigere Anströmung der Propeller entlang der gesamten anströmenden Querschnittsfläche.

Die gezielte Beeinflussung der Wassermassen durch die Leitvorrichtungen minimiert Drallverluste und resultiert somit in einer Ersparnis des Leistungsbedarfs des Wasserfahrzeugs.

Die Anströmung der Propeller kann präzise eingestellt werden, wenn die Finne eine Länge aufweist, welche 65% bis 110%, bevorzugt 80% bis 110%, besonders bevorzugt 90% bis 105%, ganz besonders bevorzugt 100%, eines Propellerradius der Propeller entspricht. Insbesondere kann hierdurch der zusätzlich zum Schiffsrumpf eingebrachte Widerstand durch die Leitvorrichtungen verringert werden.

Sind zwei Finnen je Leitvorrichtung vorgesehen, sind die Finnen der Leitvorrichtungen strukturell verstärkt, da die zwei Finnen der ersten und der zweiten Leitvorrichtung erfindungsgemäß durch einen Verbindungssteg miteinander verbunden sind.

Darüber hinaus kann der mindestens eine Verbindungssteg, welcher beispielsweise in Form eines Ringsegments oder einer geraden Verbindung zwischen den mindestens zwei Finnen verlaufen kann, die Anströmung der Propeller zusätzlich beeinflussen. Dies kann durch eine Profilierung und/oder eine Verdrehung bzw. eine Twistierung des Verbindungsstegs erzielt werden.

Der Verbindungssteg stützt die Finnen besonders effizient, da dieser erfindungsgemäß entlang einer Länge der Finnen betrachtet bevorzugt zwischen 30% und 70% der Länge der Finnen, besonders bevorzugt zwischen 45% und 55% der Länge der Finnen oder mittig angeordnet ist. Dabei kann ein einzelner Verbindungssteg mehrere Finnen, wie beispielsweise drei oder mehr Finnen miteinander koppeln bzw. verbinden.

Alternativ oder zusätzlich kann der Verbindungssteg die Spitzen von zwei Finnen miteinander verbinden oder eine Spitze einer ersten Finne mit einer zweiten Finne mechanisch verbinden.

Alternativ können mehrere Verbindungsstege vorgesehen sein, welche jeweils zwischen zwei Finnen positioniert sind. Dabei können mehrere Verbindungsstege eine Reihe bilden, welche alle Finnen einer Leitvorrichtung mechanisch miteinander koppeln bzw. verbinden.

Bevorzugterweise kann der mindestens eine Verbindungssteg eine statisch feste bzw. starre Verbindung zwischen mindestens zwei Finnen herstellen.

Gemäß einem weiteren Ausführungsbeispiel ist der Verbindungssteg entlang einer Länge und/oder Breite des Verbindungsstegs gerade oder gekrümmt geformt. Dabei kann der mindestens eine Verbindungssteg ein Tragflächenprofil aufweisen, durch welche eine gezielte Beeinflussung der Anströmung bzw. der Wasserströmung erfolgen kann.

Alternativ kann der mindestens eine Verbindungssteg ein Profil zur Minimierung seines Widerstands in der Anströmung der Propeller aufweisen.

Die Anordnung und die Leitvorrichtungen sind technisch besonders einfach ausgestaltet, da jede der Leitvorrichtungen erfindungsgemäß genau zwei Finnen umfasst.

Alternativ kann jede der Leitvorrichtungen genau drei Finnen umfassen.

Alternativ kann jede der Leitvorrichtungen genau eine Finne umfassen.

Nach einer weiteren Ausführungsform sind die Propeller als gegenläufig drehende Propeller ausgestaltet, wobei die erste Leitvorrichtung auf einer aufschlagenden Seite des ersten Propellers und die zweite Leitvorrichtung auf einer aufschlagenden Seite des zweiten Propellers angeordnet sind. Dabei werden an den aufschlagenden Seiten der Propeller bedingt durch eine asymmetrische Form der Skegs Bereiche der Anströmung bzw. des anströmenden Wassers mit einem reduzierten Vordrall ausgebildet, welcher durch die Leitvorrichtungen verstärkt werden kann.

Insbesondere sind die beiden Propeller als über oben nach innen drehende, das bedeutet in Richtung eines Bereichs zwischen den Propellern des Wasserfahrzeugs drehende, Propeller ausgebildet, wenn die Finnen der beiden Leitvorrichtungen nach außen zu den Wasserfahrzeugseiten hervorstehen.

Die Bezeichnungen "nach innen drehend" bzw. "nach außen drehend" beziehen sich auf die Drehrichtung des Propellers, bei Betrachtung eines Punktes im oberen Bereich des Propellers (das bedeutet einer 12-Uhr-Position) in Bezug auf den im am Wasserfahrzeug eingebauten Zustand des Propellers. Wenn der Propeller nach außen dreht, ist die Bewegung des Propellers an dem oberen Rotationspunkt betrachtet demnach außen zu der Wasserfahrzeugaußenseite gerichtet. Dreht der Propeller nach innen, ist die Bewegung des Propellers an dem oberen Rotationspunkt betrachtet entsprechend nach innen in Richtung eines Bereichs zwischen den beiden Propellern gerichtet.

Die Leitvorrichtungen können besonders effizient am Wasserfahrzeug positioniert werden, wenn sie im Wesentlichen spiegelsymmetrisch zueinander in Bezug auf eine vertikale Symmetrieebene des Wasserfahrzeugs positioniert sind. Hierdurch kann der Geradeauslauf des Wasserfahrzeugs durch die Leitvorrichtungen unbeeinträchtigt bleiben.

Die Anströmung der Propeller durch das Wasser kann mit Hilfe der Leitvorrichtungen und der entsprechenden Finnen besonders präzise gesteuert werden, wenn die Finnen eine entlang ihrer Länge gleichbleibende oder sich ändernde Profilierung und/oder Anstellung aufweisen.

Gemäß einem weiteren Aspekt der Erfindung wird ein Wasserfahrzeug, insbesondere ein Doppelschraubenschiff bereitgestellt. Das Wasserfahrzeug weist eine erfindungsgemäße Anordnung mit einer ersten Leitvorrichtung und einer zweiten Leitvorrichtung auf. Die beiden Leitvorrichtungen sind vorzugsweise an den Wellenlagern der Propellerachsen befestigt und erstrecken sich in Richtung der Wasserfahrzeugseiten. Insbesondere kann die erste Leitvorrichtung sich zu einer ersten bzw. rechten Wasserfahrzeugseite und die zweite Leitvorrichtung sich zu einer zweiten bzw. linken Wasserfahrzeugseite hin erstrecken.

Nachstehend werden mehrere Ausführungsbeispiele der Erfindung anhand der Zeichnungen näher erläutert. Es zeigen:
- Fig. 1: eine beispielhafte Simulation des Vordralls um Propeller eines Doppelschraubenschiffs herum,
- Fig. 2a: eine perspektivische Darstellung einer erfindungsgemäßen Anordnung gemäß einer ersten Ausführungsform,
- Fig. 2b: perspektivische Darstellungen einer erfindungsgemäßen Anordnung gemäß einer zweiten Ausführungsform,
- Fig. 3: Hinteransicht der erfindungsgemäßen Anordnung gemäß der zweiten Ausführungsform.

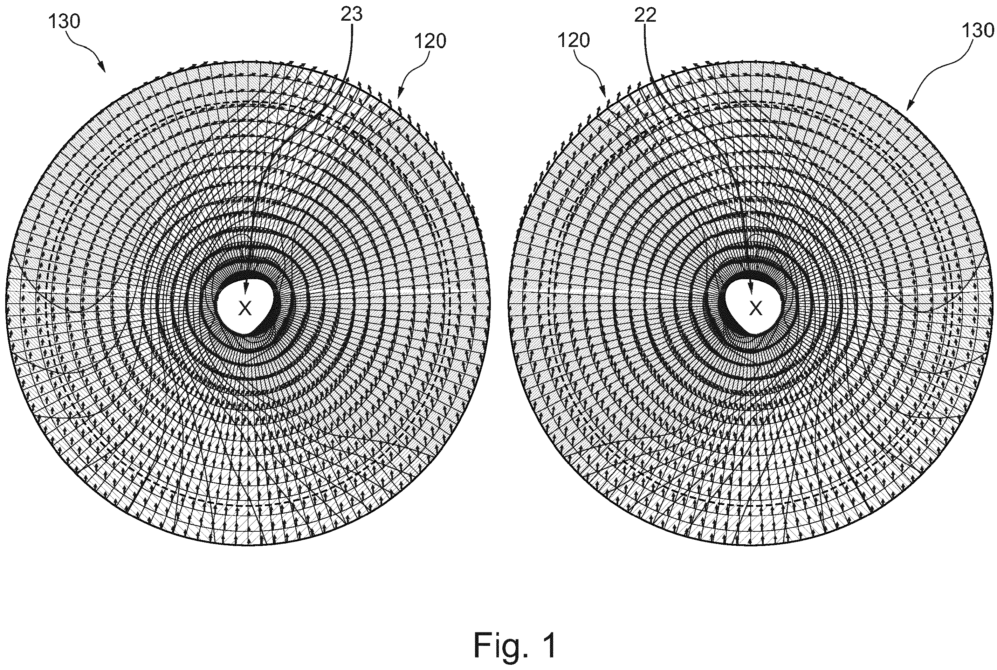

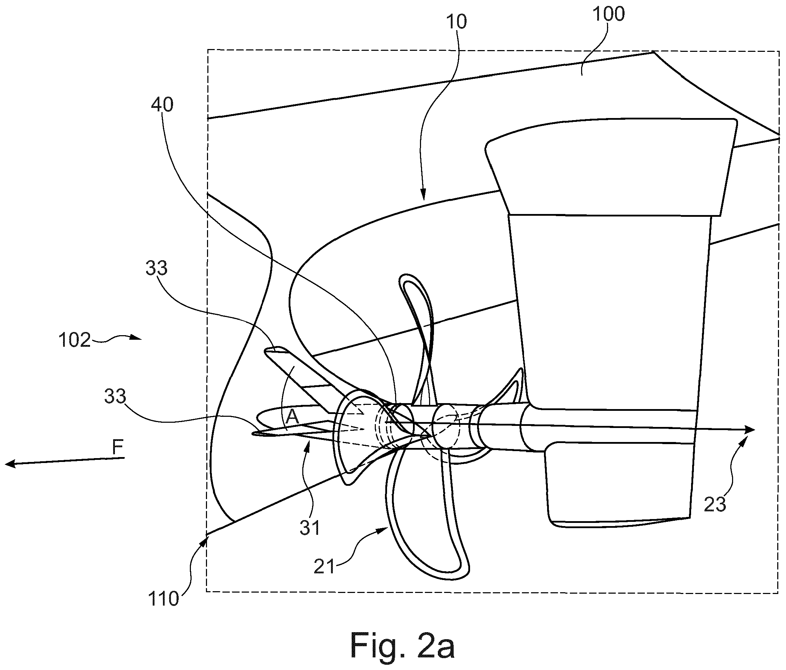

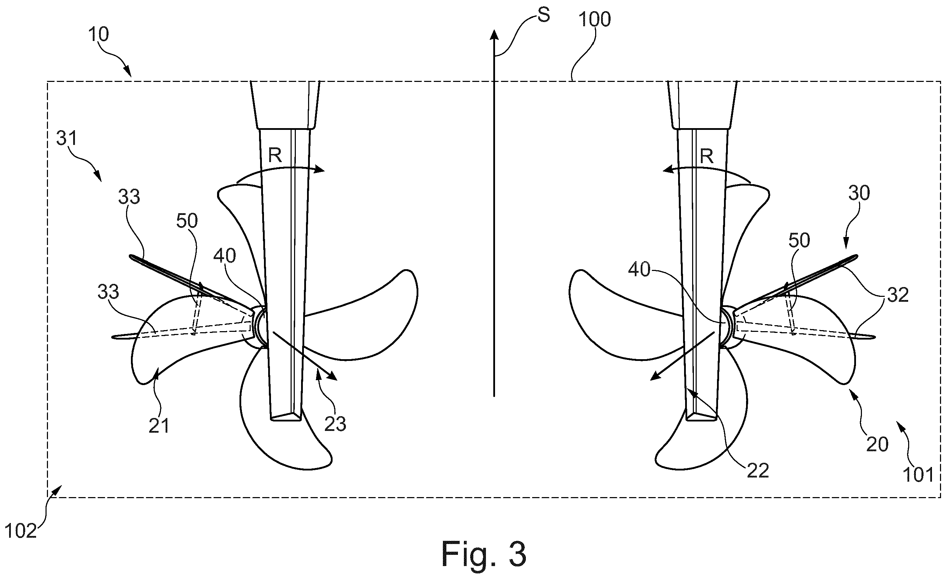

Die Fig. 1 zeigt eine beispielhafte Simulation des Vordralls im Bereich der Propeller 20, 21 eines Doppelschraubenschiffs 100, welche beispielhaft in Fig. 2a und Fig. 3 gezeigt sind. Die Simulation zeigt eine Querschnittsfläche einer Anströmung bzw. in Richtung der Propeller 20, 21 strömenden Wassers mit entsprechender Vordrall-Verteilung. Es wird ein Vordrall um eine erste Propellerachse 22 und um eine zweite Propellerachse 23 eines als Doppelschraubenschiff ausgestalteten Wasserfahrzeugs 100 gezeigt.

Durch eine asymmetrische Form eines Skegs 110 des Wasserfahrzeugs 100 entstehen Bereiche mit einem erhöhten Vordrall 120 und Bereiche mit einem reduzierten bzw. nicht vorhandenen Vordrall 130. Die entsprechenden Pfeillängen veranschaulichen ein beispielhaftes Maß des Vordralls, wobei hell schattierte Bereiche einem reduzierten Vordrall und dunkel schattierte Bereiche einem erhöhten Vordrall in Bezug auf eine Propellerdrehrichtung entsprechen.

Die in Fig. 2a gezeigte erfindungsgemäße Anordnung 10 weist Leitvorrichtungen 30, 31 auf, welche nur noch in Bereichen 130 angeordnet werden, in denen kein Vordrall bzw. eine ungünstige Zuströmung vorliegt.

Die Fig. 2a zeigt eine perspektivische Darstellung einer erfindungsgemäßen Anordnung 10 gemäß einer ersten Ausführungsform. Die Anordnung 10 dient zur Verringerung des Antriebsleistungsbedarfs des Doppelschraubenschiffs bzw. Wasserfahrzeugs 100. Dabei ist der Übersicht halber nur eine zweite bzw. linke Seite eines Heckabschnitts des Wasserfahrzeugs 100 dargestellt. In der Fig. 3 ist eine Heckansicht des Wasserfahrzeugs 100 gezeigt, welche beide Seiten veranschaulicht. Die Fig. 2a wird unter Bezugnahme der Fig. 3 beschrieben.

Die Anordnung 10 weist einen ersten Propeller 20 und einen zweiten Propeller 21 auf. Des Weiteren weist die Anordnung 10 eine erste Leitvorrichtung 30 und eine zweite Leitvorrichtung 31 auf.

In Vorwärtsfahrtrichtung F des Wasserfahrzeugs 100 betrachtet ist die erste Leitvorrichtung 30 vor dem ersten Propeller 20 und die zweite Leitvorrichtung 31 vor dem zweiten Propeller 21 angeordnet.

Der erste Propeller 20 und der zweite Propeller 21 sind an einer ersten, nicht gezeigten, Propellerwelle und an einer zweiten, nicht gezeigten, Propellerwelle befestigt, wobei die erste Propellerwelle die erste Propellerachse 22 und die zweite Propellerwelle die zweite Propellerachse 23 definieren.

Die erste Leitvorrichtung 30 und die zweite Leitvorrichtung 31 weisen im dargestellten Ausführungsbeispiel jeweils zwei Finnen 32, 33 auf, welche sich radial von den Propellerachsen 22, 23 aus erstrecken. Die Finnen 32, 33 der ersten Leitvorrichtung 30 und der zweiten Leitvorrichtung 31 erstrecken sich nach außen zu Wasserfahrzeugseiten 101, 102.

Insbesondere erstreckt sich die erste Leitvorrichtung 30 zu einer ersten bzw. rechten Wasserfahrzeugseite 101 und die zweite Leitvorrichtung 31 zu einer zweiten bzw. linken Wasserfahrzeugseite 102.

Die zwei Finnen 32, 33 der ersten und der zweiten Leitvorrichtung 30, 31 weisen einen Winkel A zueinander auf. Dabei sind die zwei Finnen 32, 33 der Leitvorrichtungen 30, 31 beispielhaft im Bereich von Wellenlagern 40, insbesondere an Hüllen von Stevenrohren, welche zur Lagerung der ersten und zweiten Propellerwelle des Wasserfahrzeuges 100 ausgebildet sind, befestigt.

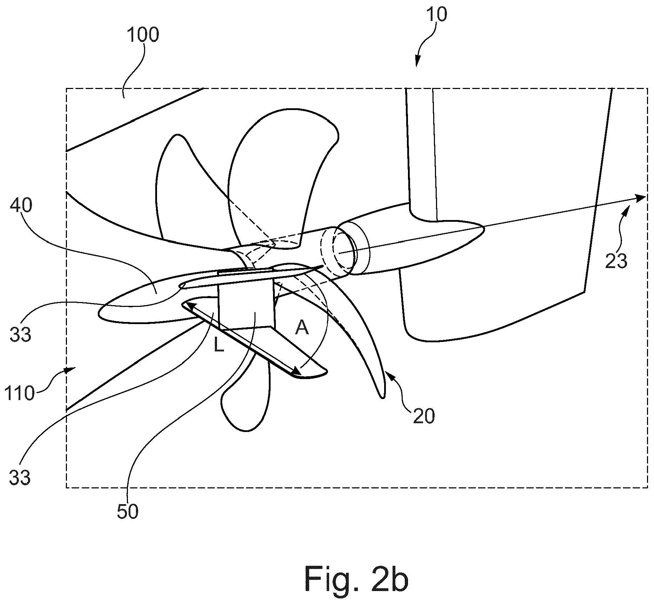

In der Fig. 2b ist eine perspektivische Darstellung einer erfindungsgemäßen Anordnung 10 gemäß einer zweiten Ausführungsform gezeigt. Insbesondere ist in der Fig. 2b eine Seitenansicht des Wasserfahrzeugs 100 analog zur Fig. 2a gezeigt. Im Unterschied zu der bereits beschriebenen Ausführungsform weist die Anordnung 10 einen Verbindungssteg 50 radial mittig jeweils zwischen den Finnen 32, 33 auf.

Die Finnen 32, 33 weisen eine Länge L auf, die beispielhaft 100%, eines Propellerradius der Propeller 20, 21 entspricht.

Die zwei radial hervorstehenden Finnen 32, 33 weisen einen ungefähr radial mittig angeordneten Verbindungssteg 50 auf. Der Verbindungssteg 50 kann die Finnen 32, 33 strukturell verstärken. Insbesondere werden die Finnen 32, 33 durch den Verbindungssteg 50 mechanisch miteinander verbunden.

In der Fig. 3 ist eine Heckansicht des Wasserfahrzeugs 100 gezeigt. Dabei wird die gesamte Anordnung 10 verdeutlicht. Die erste und die zweite Leitvorrichtung 30, 31 erstrecken sich in Richtung der ersten bzw. der zweiten Wasserfahrzeugseite 101, 102 ausgehend von den Hüllen der Stevenrohren bzw. Wellenlagern 40. Die Rotationsrichtung der beiden Propeller ist mit den beiden Pfeilen R angedeutet, welche an einem oberen Rotationspunkt, das bedeutet an einer 12:00 Uhr-Position, nach innen zeigend angeordnet sind.

Bei nach innen drehenden Propellern 20, 21 in Richtung der Pfeile R sind die beiden Leitvorrichtungen 30, 31 jeweils außenliegend bzw. auf den aufschlagenden Seiten der Propeller 20, 21 angeordnet. Ausgehend von einer heckseitigen Betrachtung befinden sich die Leitvorrichtungen 30, 31 somit auf 3:00 Uhr und auf 9:00 Uhr. Bei einer derartigen Ausbildung der Anordnung 10 sind die Leitvorrichtungen 30, 31 vorzugsweise gegenüber einer vertikalen Symmetrieebene S des Wasserfahrzeugs 100 symmetrisch zueinander angeordnet.

Durch eine derartige Anordnung der Leitvorrichtungen 30, 31 kann insbesondere bei Doppelschraubenschiffen eine besonders hohe Energieeinsparung beziehungsweise Treibstoffreduzierung erreicht werden.

Bevorzugterweise sind neben den Leitvorrichtungen 30, 31 keine weiteren Energiesparvorrichtungen umfassend Finnen oder Düsen am Wasserfahrzeug im Bereich der Propeller 20, 21 oder auch an Rudern angeordnet.

Die Fig. 3 verdeutlicht auch den symmetrischen Aufbau der Anordnung 10 bzw. der Leitvorrichtungen 30, 31. Dabei ist auch ersichtlich, dass das Verbindungsstück bzw. der Verbindungssteg 50 entlang der Länge L der Finnen 32, 33 betrachtet in etwa mittig mit den Finnen 32, 33 befestigt ist.

### Bezugszeichenliste

- 100: Wasserfahrzeug / Doppelschraubenschiff
- 101: erste / rechte Wasserfahrzeugseite
- 102: zweite / linke Wasserfahrzeugseite
- 110: Skegs des Wasserfahrzeugs
- 120: Bereiche mit einem erhöhten Vordrall
- 130: Bereiche mit einem reduzierten Vordrall

- 10: Anordnung

- 20: erster Propeller
- 21: zweiter Propeller
- 22: erste Propellerachse
- 23: zweite Propellerachse

- 30: erste Leitvorrichtung
- 31: zweite Leitvorrichtung
- 32: Finnen der ersten Leitvorrichtung
- 33: Finnen der zweiten Leitvorrichtung

- 40: Wellenlager

- 50: Verbindungssteg

- A: Winkel zwischen zwei Finnen
- F: Vorwärtsfahrtrichtung
- L: Länge einer Finne
- S: vertikale Symmetrieebene des Wasserfahrzeugs
- R: Rotationsrichtung

## Patentansprüche

1. Anordnung (10) zur Verringerung des Antriebsleistungsbedarfs eines Doppelschraubenschiffs, aufweisend einen ersten Propeller (20) und einen zweiten Propeller (21) und aufweisend eine erste Leitvorrichtung (30) und eine zweite Leitvorrichtung (31), wobei in Vorwärtsfahrtrichtung (F) des Wasserfahrzeugs (100) betrachtet die erste Leitvorrichtung (30) vor dem ersten Propeller (20) und die zweite Leitvorrichtung (31) vor dem zweiten Propeller (21) angeordnet sind, wobei der erste Propeller (20) und der zweite Propeller (21) an einer ersten Propellerwelle und an einer zweiten Propellerwelle befestigt sind, wobei die erste Propellerwelle eine erste Propellerachse (22) und die zweite Propellerwelle eine zweite Propellerachse (23) definieren, wobei die erste Leitvorrichtung (30) und die zweite Leitvorrichtung (31) jeweils mindestens eine Finne (32, 33) aufweisen, welche sich von den Propellerachsen (22, 23) aus erstreckt, wobei die Finne (32, 33) der ersten Leitvorrichtung (30) und der zweiten Leitvorrichtung (31) sich jeweils nach außen zu den Wasserfahrzeugseiten (101, 102) erstreckt, **dadurch gekennzeichnet, dass** jede der Leitvorrichtungen (30, 31) genau zwei Finnen (32, 33) umfasst, wobei die zwei Finnen (32, 33) der ersten und der zweiten Leitvorrichtung (30, 31) jeweils durch einen Verbindungssteg (50) miteinander verbunden sind, wobei der Verbindungssteg (50) entlang einer Länge (L) der Finnen (32, 33) betrachtet zwischen 30% und 70% der Länge der Finnen, bevorzugt zwischen 45% und 55%, besonders bevorzugt mittig bei 50% der Länge (L) der Finnen (32, 33) angeordnet ist, und wobei sich der Verbindungssteg (50) ausschließlich zwischen den beiden Finnen (32, 33) erstrecken.

2. Anordnung nach Anspruch 1, wobei die mindestens zwei Finnen (32, 33) der ersten und der zweiten Leitvorrichtung (30, 31) einen Winkel (A) zueinander aufweisen, wobei die mindestens zwei Finnen (32, 33) der Leitvorrichtungen (30, 31) im Bereich von Wellenlagern (40), insbesondere an Hüllen von Stevenrohren, welche zur Lagerung der ersten und zweiten Propellerwelle des Wasserfahrzeuges (100) ausgebildet sind, oder an einer Wasserfahrzeughülle befestigt sind.

3. Anordnung nach Anspruch 1 bis 2, wobei die mindestens eine Finne (32, 33) der Leitvorrichtungen (30, 31) dazu eingerichtet ist einen Vordrall bei einer Anströmung des ersten und des zweiten Propellers (20, 21) zu erzeugen, wobei der Vordrall durch die jeweilige Leitvorrichtung (30, 31) in einem Anströmungsbereich (130) der Propeller (20, 21) erzeugt wird, welcher keinen oder einen reduzierten durch mindestens einen asymmetrischen Skeg (110) erzeugten Vordrall aufweist.

4. Anordnung nach einem der Ansprüche 1 bis 3, wobei die Finne (32, 33) eine Länge (L) aufweisen, wobei die Länge (L) der Finne (32, 33) 65 % bis 110 %, bevorzugt 80 % bis 110 %, besonders bevorzugt 90% bis 105%, ganz besonders bevorzugt 100 %, eines Propellerradius der Propeller (20, 21) entspricht.

5. Anordnung nach Anspruch 1, wobei der Verbindungssteg (50) entlang einer Länge und/oder Breite des Verbindungsstegs (50) gerade oder gekrümmt geformt ist.

6. Anordnung nach einem der Ansprüche 1 bis 5, wobei die Propeller (20, 21) als gegenläufig drehende Propeller (20, 21) ausgestaltet sind, wobei die erste Leitvorrichtung (30) auf einer aufschlagenden Seite des ersten Propellers (20) und die zweite Leitvorrichtung (31) auf einer aufschlagenden Seite des zweiten Propellers (21) angeordnet sind.

7. Anordnung nach einem der Ansprüche 1 bis 6, wobei die Leitvorrichtungen (30, 31) im Wesentlichen spiegelsymmetrisch zueinander in Bezug auf eine vertikale Symmetrieebene (S) des Wasserfahrzeugs (100) positioniert sind.

8. Anordnung nach einem der Ansprüche 1 bis 7, wobei die wenigstens eine Finne (32, 33) eine entlang ihrer Länge (L) gleichbleibende oder sich ändernde Profilierung und/oder Anstellung aufweist.

9. Doppelschraubenschiff, aufweisend eine Anordnung (10) gemäß einem der vorhergehenden Ansprüche.

## Claims

1. Arrangement (10) for reducing the propulsion power requirement of a twin-screw vessel, having a first propeller (20) and a second propeller (21) and having a first guiding device (30) and a second guiding device (31), wherein, viewed in the forward direction (F) of the watercraft (100), the first guiding device (30) is arranged in front of the first propeller (20) and the second guiding device (31) is arranged in front of the second propeller (21), wherein the first propeller (20) and the second propeller (21) are attached to a first propeller shaft and to a second propeller shaft, wherein the first propeller shaft defines a first propeller axis (22) and the second propeller shaft defines a second propeller axis (23), wherein the first guiding device (30) and the second guiding device (31) each have at least one fin (32, 33) extending from the propeller axes (22, 23), wherein the fin (32, 33) of the first guiding device (30) and the second guiding device (31) each extending outwardly toward the sides (101, 102) of the watercraft, **characterized in that** each of the guiding devices (30, 31) comprises exactly two fins (32, 33), wherein the two fins (32, 33) of the first and second guiding devices (30, 31) are each connected to each other by a connecting web (50), wherein the connecting web (50), viewed along a length (L) of the fins (32, 33), is arranged between 30% and 70% of the length of the fins (32, 33), preferably between 45% and 55%, particularly preferably centrally at 50% of the length (L) of the fins (32, 33), and wherein the connecting web (50) extends exclusively between the two fins (32, 33).

2. Arrangement according to claim 1, wherein the at least two fins (32, 33) of the first and second guiding devices (30, 31) have an angle (A) with respect to each other, wherein the at least two fins (32, 33) of the guiding devices (30, 31) are attached in the area of shaft bearings (40), in particular on hulls of stern tubes, which are formed to support the first and second propeller shafts of the watercraft (100), or on a watercraft hull.

3. Arrangement according to claims 1 to 2, wherein the at least one fin (32, 33) of the guiding devices (30, 31) is configured to generate a forward twist in the flow around the first and second propellers (20, 21), wherein the forward twist is generated by the respective guiding device (30, 31) in a flow area (130) of the propellers (20, 21) which has no or a reduced forward twist generated by at least one asymmetrical skeg (110).

4. Arrangement according to one of claims 1 to 3, wherein the fin (32, 33) has a length (L), wherein the length (L) of the fin (32, 33) is corresponds to 65% to 110%, preferably 80% to 110%, particularly preferably 90% to 105%, and especially preferably 100%, of a propeller radius of the propellers (20, 21).

5. Arrangement according to claim 1, wherein the connecting web (50) is formed straight or curved along a length and/or width of the connecting web (50).

6. Arrangement according to one of claims 1 to 5, wherein the propellers (20, 21) are designed as counter-rotating propellers (20, 21), wherein the first guiding device (30) is arranged on an impact side of the first propeller (20) and the second guiding device (31) is arranged on an impact side of the second propeller (21).

7. Arrangement according to one of claims 1 to 6, wherein the guiding devices (30, 31) are positioned substantially mirror-symmetrically to each other with respect to a vertical plane of symmetry (S) of the watercraft (100).

8. Arrangement according to one of claims 1 to 7, wherein the at least one fin (32, 33) has a profile and/or angle of attack that remains constant or changes along its length (L).

9. Twin-screw vessel having an arrangement (10) according to one of the preceding claims.

## Revendications

1. Dispositif (10) destiné à réduire la puissance motrice requise d'un navire à double hélice, comprenant une première hélice (20) et une deuxième hélice (21) et comprenant un premier dispositif de guidage (30) et un deuxième dispositif de guidage (31), dans lequel, vu dans le sens de marche avant (F) du bateau (100), le premier dispositif de guidage (30) est disposé devant la première hélice (20) et le deuxième dispositif de guidage (31) est disposé devant la deuxième hélice (21), la première hélice (20) et la deuxième hélice (21) étant fixées à un premier arbre d'hélice et à un deuxième arbre d'hélice, le premier arbre d'hélice définissant un premier axe d'hélice (22) et le deuxième arbre d'hélice définissant un deuxième axe d'hélice (23), le premier dispositif de guidage (30) et le deuxième dispositif de guidage (31) comportant chacun au moins un aileron (32, 33) qui s'étend à partir des axes d'hélice (22, 23), l'aileron (32, 33) du premier dispositif de guidage (30) et du deuxième dispositif de guidage (31) s'étendant chacun vers l'extérieur vers les côtés (101, 102) du bateau, **caractérisé en ce que** chacun des dispositifs de guidage (30, 31) comprend exactement deux ailerons (32, 33), les deux ailerons (32, 33) des premier et deuxième dispositifs de guidage (30, 31) étant reliées entre elles par une nervure de liaison (50), la nervure de liaison (50) représentant, sur une longueur (L) des ailerons (32, 33), est disposée entre 30 % et 70% de la longueur des ailerons, de préférence entre 45 % et 55 %, de manière particulièrement préférée au milieu à 50 % de la longueur (L) des ailerons (32, 33), et la nervure de liaison (50) s'étendant exclusivement entre les deux ailerons (32, 33).

2. Dispositif selon la revendication 1, dans lequel les au moins deux ailerons (32, 33) des premier et deuxième dispositifs de guidage (30, 31) forment un angle (A) l'une par rapport à l'autre, les au moins deux ailerons (32, 33) des dispositifs de guidage (30, 31) sont fixées dans la zone des paliers d'arbre (40), en particulier sur des coques de tubes d'étambot, qui sont conçues pour supporter les premier et deuxième arbres d'hélice du bateau (100), ou sur une coque de bateau.

3. Dispositif selon les revendications 1 à 2, dans lequel l'au moins un aileron (32, 33) des dispositifs de guidage (30, 31) est conçue pour générer une pré-torsion lors d'un écoulement sur la première et la deuxième hélice (20, 21), le pré-torsion étant généré par le dispositif de guidage respectif (30, 31) dans une zone d'écoulement (130) des hélices (20, 21) qui ne présente aucun pré-torsion ou un pré-torsion réduit généré par au moins un skeg asymétrique (110).

4. Dispositif selon l'une des revendications 1 à 3, dans lequel l'aileron (32, 33) présente une longueur (L), la longueur (L) de l'aileron (32, 33) correspond à 65 % à 110 %, de préférence 80 % à 110 %, de manière particulièrement préférée 90 % à 105 %, de manière tout particulièrement préférée 100 %, d'un rayon d'hélice des hélices (20, 21).

5. Dispositif selon la revendication 1, dans lequel la nervure de liaison (50) est de forme droite ou courbe le long d'une longueur et/ou d'une largeur de la nervure de liaison (50).

6. Dispositif selon l'une des revendications 1 à 5, dans lequel les hélices (20, 21) sont conçues comme des hélices à rotation inverse (20, 21), le premier dispositif de guidage (30) étant disposé sur un côté d'impact de la première hélice (20) et le deuxième dispositif de guidage (31) étant disposé sur un côté d'impact de la deuxième hélice (21).

7. Dispositif selon l'une des revendications 1 à 6, les dispositifs de guidage (30, 31) étant positionnés de manière essentiellement symétrique l'un par rapport à l'autre par rapport à un plan de symétrie vertical (S) du bateau (100).

8. Dispositif selon l'une des revendications 1 à 7, dans lequel l'au moins un aileron (32, 33) présente un profil et/ou un angle d'attaque constant ou variable sur sa longueur (L).

9. Navire à double hélice, comprenant un dispositif (10) selon l'une des revendications précédentes.
